# EUROPEAN PATENT SPECIFICATION

(11) **EP 1 202 678 B1**
(45) Date of publication and mention of the grant of the patent: **10.03.2004**
(21) Application number: 00954555.9
(22) Date of filing: 21.07.2000
(51) Int. Cl.: A61C 8/00

(54) **A DEVICE FOR DENTAL IMPLANTATION**
VORRICHTUNG ZUR ZAHNÄRZTLICHEN IMPLANTATION
DISPOSITIF D'IMPLANT DENTAIRE

(30) Priority: 26.07.1999 IT MI991641
(43) Date of publication of application: 08.05.2002
(73) Proprietor: Corcolis, Ioannis, 63017 Porto San Giorgio (IT)
(72) Inventor: Corcolis, Ioannis, 63017 Porto San Giorgio (IT)
(74) Representative: Gervasi, Gemma, Dr.
(86) International application number: PCT/EP2000/007024
(87) International publication number: WO 2001/006944

(56) References cited:
- EP-A- 0 868 889
- DE-A- 4 239 060
- DE-A- 19 803 172
- US-A- 5 004 422

## Description

### Field of the invention

The invention consists of a device for dental implantation (hereafter referred to as: "the implant") meant to replace the root of a lost tooth and help the maintenance and/or reconstruction of the peridental tissues (bone and gum); the final surface edge of its neck has a profile which basically corresponds to that of the margin of the alveolar bone crest in a state of parodontal health.

### Background of the invention

The implants are well known in the previous technique and widely used to replace the roots of lost teeth.

For such purposes, the implants are inserted into the maxillary or mandibular bone in place of the missing roots and are afterwards connected thereto with an additional structure (the so-called "prosthetic stump") on which the artificial tooth crown or another type of support for dental prosthesis is secured.

The implants are usually made of titanium or titanium alloy (ceramic or surgical steel implants are less common) and may have different shapes (needle, blade, cylindrical or cone-shaped): the most recent and widely used implants have similar shapes to that of monoradicular teeth roots and hence are cylindrical, conical or truncated cone-shaped, being threaded or unthreaded.

Implants may be defined as emergent or covered, with reference to their positioning in relation to the gum covering the bone.

An implant consists of a body of different length whose most apical part is inserted deep into the bone, while the outermost part continues up to the so-called "neck", which is the implant part connecting with the prosthetic stump.

Part of the body is recess inside to receive the aforesaid prosthetic stump which (depending on the connection type used each time) may include an internal fixing screw.

In implants employed until present, the neck has a circular section and the internal recess of the body (having a hexagonal, octagonal, conical or mixed shape and/or any other possible shape considered advantageous each time for the specific application) forms the female part of a coupling with the prosthetic stump being the male part; in any case, the resulting neck surface is flat and of circular section.

The external surface of the implant body may have a spiral recess or prominence and/or be roughened (by mechanical and/or chemical means) to improve bone adhesion to the implant body, while the neck surface (to be in contact with the gum) is usually smooth.

In a known type implant the crossing line between the roughened body surface and the smooth neck is formed by a flat circular line.

The tissue behaviour (bone and gingiva) around a natural tooth and an artificial tooth, consisting in an implant and a prosthetic stump bearing the artificial tooth crown, is now briefly shown.

If the tooth is natural, the gum is positioned at the level of the anatomical neck of the tooth and develops in its typical sinusoidal shape: higher than the tooth margin (i.e. nearer the base of the bone) in the front and rear part, lower than the tooth margin (i.e, further away from the base of the bone) in the side or interproximal parts bordering on the neighbouring teeth, where it "squeezes" between two adjacent teeth forming the so-called interdental papillae.

The margin of the crest of the bone in a state of parodontal health develops as sinusoidally as the gingival groove, being about 2.5-3 mm therefrom, in an apical direction. This distance (the so-called "biological depth") is due, apart from genetic factors, to the fact that bacteria are present in the gingival groove and the bone lies, of its own accord, at the aforesaid distance from the "infected" area: if for any reason the bacteria remain for a long time at a greater depth than the gingival groove, the bone is reabsorbed to re-establish the aforesaid "biological depth".

Having to replace a natural tooth with an artificial tooth, it would be very important (for both aesthetic and practical reasons) to keep the characteristic appearance of the gum around the tooth due to the interdental papillae, unlikely present if the underlying "osseous papilla" is missing: therefore it would be useful and advantageous to recreate an identical biological situation around the artificial tooth to that present around a natural tooth, preserving (as much as possible) the entirety of the bone, particularly at the "osseous papillae" that support the interdental papillae or helping bone regeneration, if same is missing due to a pathological process.

This is very difficult with the implants available on the market, since the line resulting from the connection between the final surface of their neck and the prosthetic stump is a flat circular line: thus a circular groove is formed which creates the necessary conditions for the settling of bacterial colonies and is thus equivalent to the gingival groove of a natural tooth.

To re-establish the "biological depth" the bone is apically reabsorbed so as to be equidistant from the circular groove on the different faces (frontal, rear and side) of the artificial tooth-implant unit.

This situation is not the same as that found around natural teeth.

In particular, the bone is missing at the "osseous papillae" and, accordingly, it is difficult to preserve the interdental papillae (no longer supported) over time and/or to allow for the regeneration thereof in a foreseeable way.

The presence of interdental papillae takes on particular importance for the artificial teeth supported by implants set in the frontal mouth sections, where aesthetic factors are conclusive factors.

Implants different from that subject of the present invention are disclosed, for example, by EP-A-868889 which shows a device for dental implantation whose final surface provides for two asymmetrical sliding surfaces coming from two edges defining a central hollow portion, the edge profile of said final surface comprising angular points at the intersection of the hollow portion edges with the lateral surface of the device; by DE-B-4239060 which shows a dental implantation device to be immediately implanted for tooth replacement (no information about the final surface of the dental implantation device neck is provided) and by DE-A-19803172, which shows a device for dental implantation where its final surface has a first crest and two sliding surfaces asymmetrical descending therefrom, a further smaller crest being formed on said first crest.

Furthermore, US-A-5004422 discloses a process for preparing and implanting immediately an oral endosteal implant: no mechanical features of said oral endosteal implant is disclosed by US-A-5004422

The implant, subject of the present invention, allows the remedying of the aforesaid drawback, since the final surface profile of its neck (forming the contact surface with the prosthetic stump) is basically corresponding to that of the margin of the alveolar bone crest in a state of parodontal health: obviously the prosthetic stump mounted on an implant, according to the invention, must have a contact surface shape which exactly complements that of the final surface of the neck of the implant.

By suitably positioning an implant, according to the invention, in a semi-covered position the artificial tooth crown can be directly applied there to, without the interposition of a prosthetic stump: in this case the contact surface shape of the artificial tooth crown must exactly complement that of the final surface of the neck of the implant.

The course made by the contact line between an implant according to the invention, and the corresponding prosthetic stump (or the crown of the artificial tooth), i.e. of the groove where bacterial colonies settle is not different, for this reason, from that of the gingival groove around a natural tooth: accordingly, the bone is not only just blocked but, indeed, is "guided" to preserve or recreate its natural architecture around the implant and gingival tissue therefore maintaining a more natural and harmonious appearance around the teeth.

### Summary of the invention

The subject of the present invention is a device for dental implantation, comprising a roughened body to be inserted into the maxillary or mandibular bone and a smooth neck, where the edge of the final surface of the smooth neck of the device has a curved profile: at the front and back side of the artificial tooth supported by the device the convexity of the edge of the final surface of the smooth neck is directed towards the apical portion of the roughened body, whereas at the side faces of the artificial tooth the concavity of the edge of the final surface of the smooth neck is directed towards the apical portion of the roughened body.

Furthermore, the roughened body is separated from the smooth neck by a line which is parallel to the edge of the final surface of the smooth neck.

### List of the figures

The invention will be better described with reference to an embodiment example of non-limiting type shown in the figures enclosed, in which:
- figure 1 diagrammatically shows a partly sectional side view of an artificial tooth made by a known type of implant;
- figure 2 diagrammatically shows a perspective view of an implant according to the invention;
- figure 3 diagrammatically shows a frontal view of an area of the upper dental arch including an artificial tooth made by a known type of implant and placed between natural teeth;
- figure 4 diagrammatically shows a frontal view of an area of the upper dental arch including an artificial tooth made by an implant, according to the invention and placed between natural teeth;
- figure 5 shows a side view of a natural tooth in its socket;
- figure 6 shows a side view of an artificial tooth made by a known type of implant and placed in the purpose-built artificial socket;
- figure 7 shows a side view of an artificial tooth made by an implant, according to the invention, and placed in the purpose-built artificial socket;
- figure 8 diagrammatically shows an implant according to the invention and its relative prosthetic stump;
- figure 9 diagrammatically shows a known type implant and an implant according to the invention.

In the enclosed figures the corresponding parts are identified by the same number references.

### Detailed description of the invention

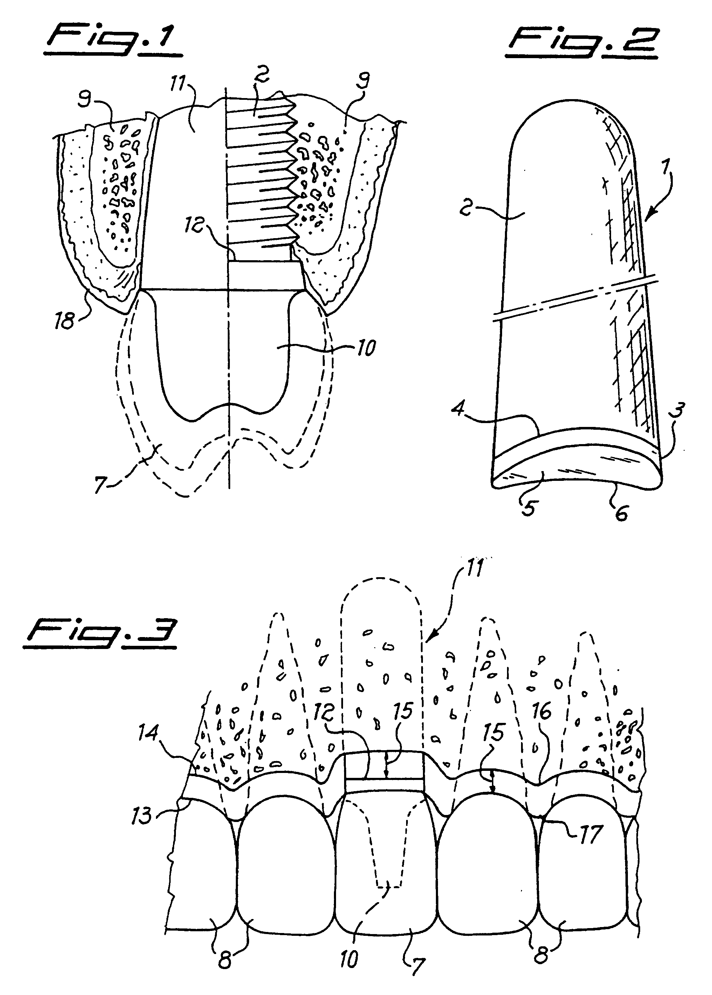

Figure 1 diagrammatically shows a partly sectional side view of an artificial tooth 7 made by a known type implant 11, placed at the bone 9 and covered by the gum 18; in figure 1 are visible the body 2 of implant 11 (whose outer surface is threaded) and the prosthetic stump 10 supporting the artificial tooth 7.

From the sectional right-hand part of the artificial tooth 7 it may be seen that, as said previously, the contact line 12 between the prosthetic stump 10 and the final surface of the implant neck 11 follows a straight line.

An implant 11 of known type is shown as a non-limiting example in figure 9.a.

Figure 2 diagrammatically shows a perspective view of an implant 1 made according to the invention: in the figure are visible the roughened surface of the body 2, the smooth neck 3, the line 4 that separates the body 2 from the neck 3 and the final surface 5 of the neck 3, whose edge 6 has a profile basically corresponding to that of the margin of the alveolar bone crest 9 in a state of parodontal health, omitted in figure 2 (together with gum 18) for ease of illustration and shown in figures 3 and 4 by a dotted line.

At the front and back side of the artificial tooth 7 supported by implant 1 (figure 4), the edge 6 of the final surface 5 of the neck 3 of the implant 1 has a curved profile with its convexity directed towards the base of the bone 9, whereas at the side faces of the artificial tooth 7 the edge 6 of the final surface 5 of the neck 3 of the implant 1 has a curved profile with its concavity directed towards the base of the bone 9.

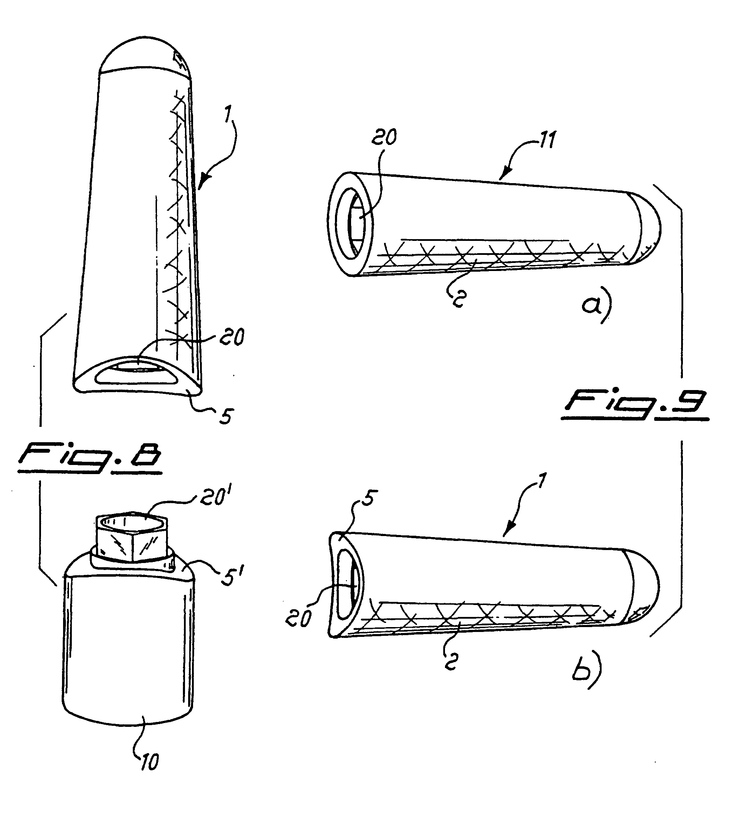

To highlight this particular profile of edge 6 of the final surface 5 of neck 3, figure 2 omits the prosthetic stump 10 (figure 8) and the artificial tooth 7.

Figure 3 diagrammatically shows a frontal view of an area of the upper dental arch including an artificial tooth 7 made by a known type implant 11 (figures 1 and 9.a) and placed between two natural teeth 8.

The artificial tooth 7 is supported by the prosthetic stump 10, in turn fixed to the known type implant 11; moreover, in figure 3 are diagrammatically shown the gum edge, denoted by 13, and the margin 14 of the crest of the bone 9, basically parallel to the edge 13 of the gum, being a distance 15 away, corresponding to the so-called "biological depth".

In figures 3 to 7, the roots of the natural teeth 8, respectively the prosthetic stump 10 and the implant (11, respectively 1) of the artificial tooth 7 are "see-through" visible inside the bone 9, with the gum 18 being omitted for ease of illustration.

As already said previously and clearly shown in figure 3, the contact line 12 between the prosthetic stump 10 and the final surface of the neck of the implant 11 is straight: accordingly at the artificial tooth 7 the edge 13 of the gum and the margin 14 of the crest of the bone 9 follows a (basically) flat circular course, differing from that around the natural teeth 8 due to the fact that the "osseous papillae" 16 are virtually absent and the interdental papillae 17 of the gum are much less developed.

Figure 4 outlines a front view of an area of the upper dental arch including an artificial tooth 7 made by an implant 1, according to the invention, and placed between two natural teeth 8.

The artificial tooth 7 is supported by the prosthetic stump 10, in turn fixed to the implant, according to the invention 1; moreover in figure 4 are outlined the edge 13 of the gum and the margin 14 of the crest of the bone 9, basically parallel to the edge 13 of the gum, being a distance 15 away, corresponding to the so-called "biological depth".

As figure 4 clearly shows, the contact line between the prosthetic stump 10 and implant 1 (formed by the front part of edge 6 of the final surface 5 of the neck 3 of implant 1 and by the corresponding area of the edge of contact surface 5' [figure 8] of the prosthetic stump 10) follows a (basically) curvilinear course coinciding with those of edge 13 of the gum and of margin 14 of the crest of the bone 9 at a natural tooth 8: accordingly the presence of the artificial tooth 7 does not alter the profiles of edge 13 of the gum and of the margin 14 of the crest of the bone 9 and, above all, the interdental papillae 17 and the corresponding "osseous papillae" 16 (clearly visible between two adjacent natural teeth 8) are present and also well developed at the sides of the artificial tooth 7, allowing the attainment of previously highlighted aesthetic-practical advantages.

In order to achieve the aforesaid aesthetic-practical advantages it is necessary (or advisable, at least) that:
- implant 1 should be inserted in the bone 9 so that the edge areas 6 of the final surface 5 of its neck 3 with its convexity directed towards the base of the bone 9 are placed at the front face, corresponding to the back one of the artificial tooth 7: a thus positioned implant 1 closely follows (as far as possible) the architecture of the bone 9 in a natural arch and the treated and roughened surface of its body 2 helps and guides bone 9 regeneration and particularly the "osseous papillae" 16 that support the interdental papillae 17;
- implant 1 should be joined to a prosthetic stump 10 having a contact surface 5' (figure 8), the shape of which complements that of the final surface 5 of the neck 3 of the implant 1, thus achieving improved connection stability between the implant 1 and the prosthetic stump 10 since the contact surfaces (5, 5') are not flat (as the contact surfaces for a known type implant 11) and therefore making it (virtually) impossible that the prosthetic stump 10 rotates with respect to the implant 1, reducing the probability of the consequent loosening of the intemal fixing screw.

These advantages greatly compensate for the higher production costs arising from the need to produce contact surfaces (not flat) complementary with each other and suitable to join together with (virtually) no clearance.

Figures 5 to 7 show, respectively, a side view of a natural tooth 8, an artificial tooth 7 made by an implant 11 of known type and an artificial tooth 7 made by an implant 1 according to the invention, placed in a (natural, respectively artificial) socket in bone 9 and covered by the gum; for ease of illustration, in figures 5 to 7 only the edge 13 of the gum and the margin 14 of the crest of the bone 9 are shown, explicitly omitting the "body" of the gum and the bone 9.

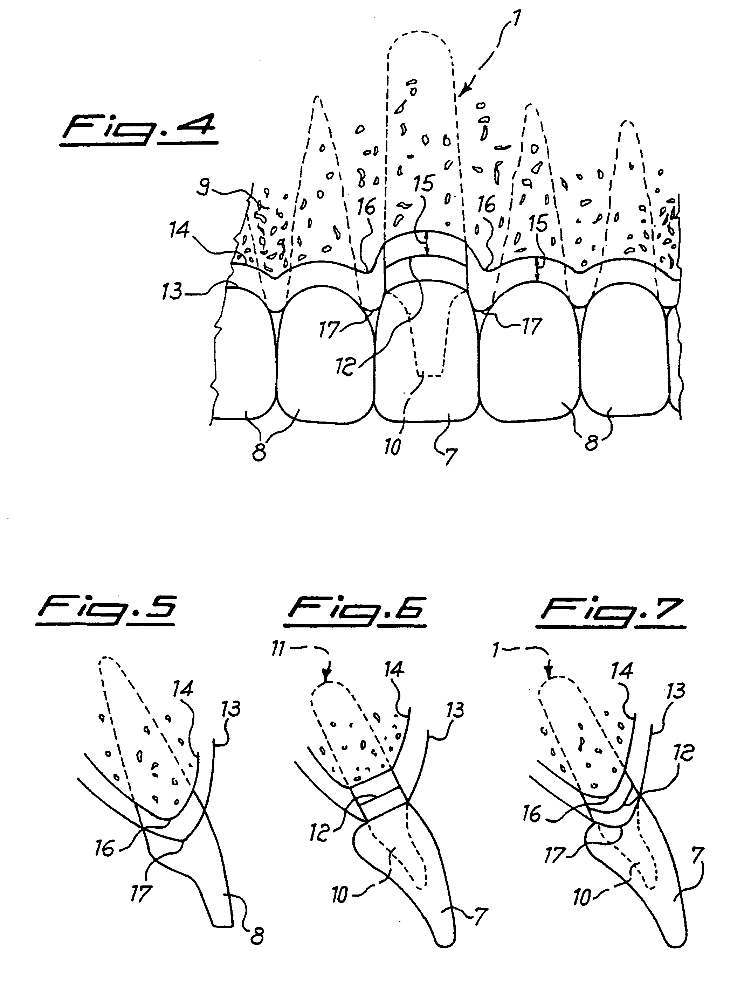

Comparison of the side view of the natural tooth 8 (figure 5) with those of an artificial tooth 7 made by an implant 1 according to the invention (figure 7), respectively by an implant 11 of known type (figure 6), clearly shows that, using an implant 1 according to the invention (figure 7), the "osseous papillae" 16 and interdental papillae 17 (supported by the "osseous papillae" 16) are clearly present and naturally developed, whereas using an implant 11 of known type (figure 6) the "osseous papillae" 16 are absent, making the long term preservation of the interdental papillae 17 much more difficult.

In fact, in figure 7 the course of edge 13 of the gum and that of margin 14 of the crest of the bone 9 (and, accordingly, the shape and dimensions of the "osseous papillae" 16 and of the interdental ones 17) are virtually identical to those found at a natural tooth 8 (figure 5), whereas in figure 6 the edge 13 of the gum and that of margin 14 of the crest of the bone 9, seen sideways, follow a (virtually) straight course and, accordingly, the "osseous papillae" 16 and the interdental papillae 17 are (virtually) absent.

Figure 8 diagrammatically shows an implant 1 made according to the invention and the relevant prosthetic stump 10, having a contact surface 5' the shape of which exactly complements that of the final surface 5 of the implant 1 neck. Moreover, in figure 8 is visible the recess 20 made in the body 2 of the implant 1 and suitable to accommodate the polygonal part 20' of the prosthetic stump 10 that, combined with the special shape of the contact surfaces (5, 5') of the implant 1 and the prosthetic stump 10, helps to further reduce the chances of the prosthetic stump 10 rotating with respect to the implant 1.

Figure 9 outlines a known type implant 11 and an implant 1 made according to the invention; in particular:
- Figure 9.a diagrammatically shows a known type implant 11, whose final surface is flat and in the body 2 of which is made the recess 20 able to accommodate the polygonal portion of the relevant prosthetic stump 10, not shown in figure 9.a;
- Figure 9.b diagrammatically shows an implant 1 made according to the invention, whose final surface 5 is shaped according to the invention: in body 2 of implant 1 is made the recess 20 able to accommodate the polygonal portion of the relevant prosthetic stump 10 (figure 8).

Without leading away from the scope of the invention it is possible for a person skilled in the art to make all the modifications and improvements to the device for dental implantation, subject of the present description, suggested by normal experience and by the natural development of the technique.

## Claims

1. A device for dental implantation, comprising a roughened body (2) to be inserted into the maxillary or mandibular bone (9) and a smooth neck (3), **characterised in that** the edge (6) of the final surface (5) of the smooth neck (3) of the device (1) has a curved profile and **in that**, at the front and back side of the artificial tooth (7) supported by the device (1), the convexity of the edge (6) of the final surface (5) of the smooth neck (3) is directed towards the apical portion of the roughened body (2), whereas at the side faces of the artificial tooth (7) the concavity of the edge (6) of the final surface (5) of the smooth neck (3) is directed towards the apical portion of the roughened body (2).

2. A device for dental implantation as claimed in claim 1, **characterised by** being joined to a prosthetic stump (10) having a contact surface (5') the shape of which is complemental to that of the final surface (5) of the smooth neck (3) of the device (1).

3. A device for dental implantation as claimed in claim 1, **characterised by** being joined to the crown of an artificial tooth which has a contact surface (5'), the shape is complemental to that of the final surface (5) of the smooth neck (3) of the device (1).

4. A device for dental implantation as claimed in claim 2 or 3, **characterised in that** the contact line (12) between the final surface (5) of the smooth neck (3) and that (5') of the prosthetic stump (10) or of the artificial tooth crown has a curved profile corresponding to that of the edge (6) of the final surface (5) of the smooth neck (3) of the device (1).

5. A device for dental implantation according any preceding claim, **characterised in that** in said final surface (5) a recess (20) is provided, suitable to accommodate a polygonal portion of a prosthetic stump.

## Patentansprüche

1. Vorrichtung zur zahnärztlichen Implantation, welche einen aufgerauten Körper (2), der in den Oberkiefer- oder den Unterkieferknochen (9) eingesetzt werden soll, sowie einen glatten Hals (3) umfasst,
**dadurch gekennzeichnet, dass** der Rand (6) der endgültigen Oberfläche (5) des glatten Halses (3) der Vorrichtung (1) ein gekrümmtes Profil aufweist und dass an der Vorder- und Rückseite des von der Vorrichtung (1) getragenen künstlichen Zahnes (7) die Konvexität des Randes (6) der endgültigen Oberfläche (5) des glatten Halses (3) in Richtung auf den apikalen Bereich des aufgerauhten Körpers (2) gerichtet ist, während an den Seitenflächen des künstlichen Zahnes (7) die Konkavität des Randes (6) der endgültigen Oberfläche (5) des glatten Halses (3) in Richtung auf den apikalen Bereich des aufgerauhten Körpers (2) gerichtet ist.

2. Vorrichtung zur zahnärztlichen Implantation gemäß Anspruch 1,
**dadurch gekennzeichnet, dass** sie mit einem prothetischen Zahnstumpf (10) zusammengefügt wird, welcher eine Kontaktfläche (5') aufweist, deren Gestalt zu derjenigen der endgültigen Oberfläche (5) des glatten Halses (3) der Vorrichtung (1) komplementär ist.

3. Vorrichtung zur zahnärztlichen Implantation gemäß Anspruch 1,
**dadurch gekennzeichnet, dass** sie mit der Krone eines künstlichen Zahnes zusammengefügt wird, welcher eine Kontaktfläche (5') aufweist, deren Gestalt zu derjenigen der endgültigen Oberfläche (5) des glatten Halses (3) der Vorrichtung (1) komplementär ist.

4. Vorrichtung zur zahnärztlichen Implantation gemäß Anspruch 2 oder 3,
**dadurch gekennzeichnet, dass** die Kontaktlinie (12) zwischen der endgültigen Oberfläche (5) des glatten Halses (3) und derjenigen (5') des prothetischen Zahnstumpfes (10) oder der Krone des künstlichen Zahnes ein gekrümmtes Profil aufweist, welches demjenigen des Randes (6) der endgültigen Oberfläche (5) des glatten Halses (3) der Vorrichtung (1) entspricht.

5. Vorrichtung zur zahnärztlichen Implantation gemäß einem der vorherigen Ansprüche,
**dadurch gekennzeichnet, dass** in der genannten endgültigen Oberfläche (5) eine Vertiefung (20) vorhanden ist, die geeignet ist, einen polygonen Bereich eines prothetischen Zahnstumpfes aufzunehmen.

## Revendications

1. Dispositif d'implant dentaire, comprenant un corps rugueux (2) à insérer dans l'os maxillaire ou mandibulaire (9) et un col lisse (3) , **caractérisé en ce que** le bord (6) de la surface finale (5) du col lisse (3) du dispositif (1) présente un profil courbé et **en ce que**, aux côtés avant et arrière de la dent artificielle (7) supportée par le dispositif (1), la convexité du bord (6) de la surface f inale (5) du col lisse (3) est dirigée vers la portion de pointe du corps rugueux (2), tandis qu'aux faces latérales de la dent artificielle (7), la concavité du bord (6) de la surface finale (5) du col lisse (3) est dirigée vers la portion de pointe du corps rugueux (2).

2. Dispositif d'implant dentaire selon la revendication 1, **caractérisé en ce qu'**il est relié à un moignon prothétique (10) possédant une surface de contact (5') dont la forme est complémentaire à celle de la surface finale (5) du col lisse (3) du dispositif (1).

3. Dispositif d'implant dentaire selon la revendication 1, **caractérisé en ce qu'**il est relié à la couronne d'une dent artificielle qui présente une surface de contact (5'), dont la forme est complémentaire à celle de la surface finale (5) du col lisse (3) du dispositif (1).

4. Dispositif d'implant dentaire selon la revendication 2 ou 3, **caractérisé en ce que** la ligne de contact (12) entre la surface finale (5) du col lisse (3) et celle (5') du moignon prothétique (10) ou de la couronne artificielle de la dent présente un profil courbé correspondant à celui du bord (6) de la surface f inale (5) du col lisse (3) du dispositif (1).

5. Dispositif d'implant dentaire selon l'une des revendications précédentes, **caractérisé en ce que** dans ladite surface finale (5), un évidement (20) est ménagé qui convient pour recevoir une portion polygonale d'un moignon prothétique.
